# EUROPÄISCHE PATENTANMELDUNG

(11) **EP 0 985 614 A2**
(43) Veröffentlichungstag der Anmeldung: **15.03.2000**
(21) Anmeldenummer: 99117535.7
(22) Anmeldetag: 04.09.1999
(51) Int. Cl.: B65H 3/08, B65H 3/40, B65H 3/36

(54) **Vorrichtung zum Transport von plattenförmigem Transportgut**

(30) Priorität: 11.09.1998 DE 19841605
(71) Anmelder: Schuler Automation GmbH & Co. KG, 91093 Hessdorf (DE)
(72) Erfinder: Wölfel,Peter, 90425 Nürnberg (DE); Vogel Norbert, 91088 Bubebreuth (DE)
(74) Vertreter: Gassner, Wolfgang, Dr.

(57) **Zusammenfassung**

Die Erfindung betrifft eine Vorrichtung zum Transport von plattenförmigem Transportgut TG, wie Blechen oder Platinen, mit einem Rahmen 1 und mindestens zwei entlang eines Rahmens 1 bewegbaren Tragelementen 11a, 11b. Zur Erhöhung der Haltbarkeit der Tragelemente ist erfindungsgemäß vorgesehen, daß ein erstes Tragelment 11a an einem am Rahmen 1 aufgenommenen ersten Schlitten 4a und ein zweites Tragelement 11b an einem am Rahmen 1 aufgenommenen zweiten Schlitten 4b angebracht und eine Einrichtung R1, R2, 6a, 6b, 7 zum gleichzeitigen Bewegen des ersten 4a und des zweiten Schlittens 4b in entgegengesetzte Richtungen vorgesehen ist.

## Beschreibung

Die Erfindung betrifft eine Vorrichtung nach dem Oberbegriff des Anspruchs 1. Sie betrifft ferner ein Verfahren zum Transport von plattenförmigem Transportgut, wie Blechen oder Platinen, mit der Vorrichtung.

Eine solche Vorrichtung ist aus der G 69 18 642.1 bekannt. Bei der bekannten Vorrichtung wird ein mit Saugnäpfen versehenes Transportband kontinuierlich um einen das Transportband tragenden Rahmen bewegt. Bei der Aufnahme eines ruhenden oder nicht mit der Geschwindigkeit des Transportbands bewegten Transportguts kommt es zu einer Reibung zwischen dem Saugnapf und dem Transportgut. Das beeinträchtigt die Haltbarkeit des Saugnapfs. - Das Transportgut beschreibt nach seinem Abwurf vom Saugnapf eine parabelförmige Flugbahn. Infolge dessen ist die Herstellung präziser aus dem Transportgut bestehender Stapel nur mit einer Stapelhilfe möglich. Schließlich hat die bekannte Vorrichtung den Nachteil, daß damit Transportgut nur in Transportrichtung, nicht jedoch entgegen der Transportrichtung bewegt werden kann.

Aufgabe der Erfindung ist es, eine Vorrichtung und ein Verfahren anzugeben, mit denen die Nachteile nach dem Stand der Technik beseitigt werden. Insbesondere sollen ein Verfahren und eine Vorrichtung bereitgestellt werden, welche einen möglichst verschleißfreien Transport sowohl in als auch entgegen einer Transportrichtung ermöglichen. Des weiteren soll die Herstellung präziser Stapel ohne besondere Stapelhilfe ermöglicht werden.

Diese Aufgabe wird durch die Merkmale der Ansprüche 1 und 16 gelöst. Zweckmäßige Ausgestaltungen der Erfindung ergeben sich aus den Merkmalen der Ansprüche 2 bis 15 und 17 bis 24.

Nach Maßgabe der Erfindung ist vorgesehen, daß ein erstes Tragelement an einem am Rahmen aufgenommenen ersten Schlitten und ein zweites Tragelement an einem am Rahmen aufgenommenen zweiten Schlitten angebracht und eine Einrichtung zum gleichzeitigen Bewegen des ersten und des zweiten Schlittens in en-tgegengesetzte Richtungen vorgesehen ist. - Mit der vorgeschlagenen Vorrichtung ist ein weitgehend verschleißfreier Transport von Transportgut sowie die Herstellung präziser Stapel möglich. Das Transportgut kann sowohl in als auch entgegen der Transportrichtung transportiert werden.

Vorteilhafterweise ist der erste Schlitten in einer am Rahmen vorgesehenen ersten und der zweite Schlitten in einer am Rahmen vorgesehenen zweiten Schiene geführt. Die Schienen sind vorzugsweise gerade ausgebildet. Ein am ersten und/oder zweiten Schlitten vorgesehenes Führungselement kann die erste bzw. zweite Schiene hintergriffig umgreifen. Das Führungselement weist vorteilhafterweise mindestens zwei einander gegenüberliegende Räder auf, deren Lauffläche im Querschnitt jeweils eine Hohlkehle bildet.

Nach einem weiteren Ausgestaltungsmerkmal ist ein vom ersten Schlitten sich erstreckendes erstes Befestigungselement am Obertrum und ein vom zweiten Schlitten sich erstreckendes zweites Befestigungselement am Untertrum eines um den Rahmen geführten Verbindungsmittels befestigbar.

Das erste und das zweite Befestigungselement können eine steuerbare Klemmvorrichtung aufweisen. Damit ist es möglich, z.B. computergesteuert, die Anordnung der beiden Schitten zueinander am Verbindungsmittel zu verändern. Das Verbindungsmittel, bei dem es sich um einen Riemen, ein Seil oder eine Kette handeln kann, ist zweckmäßigerweise um endständig am Rahmen angebrachte Rollen geführt, wobei mindestens eine der Rollen auf einer elektromotorisch angetriebenen Welle angebracht sein kann. Die vorgenannten Merkmale ermöglichen auf einfache Weise eine gleichzeitige und entgegengesetzte Bewegung des ersten und zweiten Schlittens.

Es wird als besonders vorteilhaft angesehen, daß der erste und/oder zweite Schlitten ein Mittel zum Bewegen des ersten bzw. zweiten Tragelements senkrecht zur linearen Bewegungsrichtung der Schlitten aufweist. Das Mittel zum Bewegen kann ein pneumatisch, hydraulisch oder elektromotorisch betätigtes Stellglied aufweisen. Zweckmäßigerweise ist das Stellglied in drei vorgegebene Positionen verfahrbar. Dabei kann es sich um eine nahe am Schlitten befindliche beschädigungsgeschützte Position, eine mittlere Transportposition sowie eine entfernt vom Schlitten befindliche Position zur Aufnahme bzw. Abgabe von Transportgut handeln.

Nach einem weiteren Ausgestaltungsmerkmal weisen das erste und das zweite Tragelement jeweils mindestens einen mit einer Einrichtung zur Erzeugung von Unterdruck verbundenen Saugnapf und/oder einen elektrisch schaltbaren Magneten auf. Selbstverständlich kann der erste und zweite Schlitten auch eine Mehrzahl von ersten oder zweiten Tragelementen aufweisen. Gerade die Kombination von Magneten und Saugnäpfen an einem Schlitten ist zweckmäßig, weil damit sowohl der Transport von magnetischem als auch von nichtmagnetischem Transportgut ermöglicht wird. Als vorteilhaft wird angesehen, daß der erste Schlitten zwei erste Saugnäpfe und der zweite Schlitten zwei zweite Saugnäpfe aufweisen.

Am Obertrum des Verbindungsmittels können zwei erste Schlitten und am Untertrum des Verbindungsmittels zwei zweite Schlitten jeweils im Abstand der halben Länge des Bewegungswegs befestigt sein. Dadurch ist es möglich, gleichzeitig eine hohe Transportgeschwindigkeit und mehrere Abwurfpositionen für das Transportgut zu realisieren.

Nach einem weiteren Ausgestaltungsmerkmal ist die Bewegung der Welle mit der Bewegung eines entgegen der Transportrichtung vorgeschalteten Mittels zur Herstellung des Transportguts korreliert. Bei dem Mittel kann es sich beispielsweise um ein Stanzwerkzeug handeln, dessen Taktgeschwindigkeit mit der Drehzahl der Welle so korreliert ist, daß abwechselnd vom ersten und zweiten Tragelement das zugeführte Transportgut aufgenommen und weiter transportiert werden kann.

Insbesondere zum Transport von großen Blechen oder Platinen können mehrere erfindungsgemäße Vorrichtungen nebeneinander zur Bildung einer Transporteinrichtung an einem Aufnahmerahmen gehalten sein. Dabei ist vorteilhafterweise eine gemeinsame Welle zum Antrieb einer der Rollen jeder Vorrichtung vorgesehen. Das ermöglicht eine einfache Synchronisation der Bewegungen der ersten und zweiten Schlitten jeder Vorrichtung.

Erfindungsgemäß ist des weiteren ein Verfahren zum Transport von plattenförmigem Transportgut, wie Blechen oder Platinen, mit einer Vorrichtung nach einem der vorhergehenden Ansprüche vorgesehen, umfassend die folgenden Schritte:
a) Verfahren des ersten bzw. zweiten Tragelements in eine erste vom Schlitten entfernte Position,
b) Erzeugen einer vom ersten bzw. zweiten Tragelement ausgehenden auf das Transportgut wirkenden Kraft
c) Aufnahme des Transportguts am ersten bzw. zweiten Tragelement,
d) Bewegen des ersten bzw. zweiten Schlittens entlang dem Bewegungsweg bis zu einer vorgegebenen Halteposition und
e) Wegnehmen der vom ersten bzw. zweiten Tragelement auf das Transportgut wirkenden Kraft.

Mit dem vorgeschlagenen Verfahren ist ein Transport von Transportgut sowohl in als auch entgegen einer Transportrichtung möglich. Die Lebensdauer der Tragelemente ist erhöht. Es ist möglich, präzise Stapel herzustellen.

Die Schritte lit. a und lit. b können selbstverständlich auch im umgekehrter Reihenfolge ausgeführt werden. Die vorgegebene Halteposition kann sich am einen Ende des Bewegungswegs befinden. In diesem Fall wird das Transportgut vorteilhafterweise am anderen Ende des Bewegungswegs aufgenommen. Das erste bzw. zweite Tragelement wird zweckmäßigerweise vor, während oder nach dem Schritt lit. e in die erste Position verfahren. Somit kann das Transportgut auf einen schon vorhandenen Stapel gedrückt werden. Die Bildung eines Luftpolsters zwischen dem Stapel und dem abgelegten Transportgut wird so vermieden. Dadurch ist eine besonders präzise Stapelbildung ermöglicht.

Das erste bzw. zweite Tragelement wird nach dem Schritt lit. e in eine zweite nahe am ersten bzw. zweiten Schlitten befindliche Position verfahren. Dadurch wird bei der Begegnung eines beladenen mit einem unbeladenen Schlitten eine Beschädigung des/der Tragelements/e des unbeladenen Schlittens sicher und zuverlässig vermieden.

Das erste bzw. zweite Tragelement können nach dem Schritt lit. c in eine dritte Position verfahren werden, die zwischen der ersten und der zweiten Position sich befindet. Bei dieser mittleren Position handelt es sich vorteilhafterweise um eine Transportposition. In dieser Position ist eine Kollision mit einem am Ende des Bewegungswegs befindlichen Stapel verunmöglicht.

Nach einem Ausgestaltungsmerkmal kann eine weitere vorgegebene Halteposition in der Mitte des Bewegungswegs sich befinden. In diesem Fall kann bei Erreichen der weiteren Halteposition das zweite bzw. erste Tragelement von der zweiten in die dritte Position gestellt und mit Unterdruck beaufschlagt werden, so daß das Transportgut vom ersten bzw. zweiten an das zweite bzw. erste Tragelement übergeben wird. Dazu ist es selbstverständlich erforderlich, die auf das Transportgut wirkende Kraft des abgebenden Tragelements wegzunehmen und es zweckmäßigerweise in die zweite Position zurückzufahren. Sodann kann der zweite bzw. erste Schlitten in die Halteposition bewegt werden.

Nachfolgend werden Ausführungsbeispiele der Erfindung anhand der Zeichnung näher erläutert. Hierin zeigen:
- Fig. 1: eine schematische Querschnittsansicht einer ersten Vorrichtung,
- Fig. 2: eine schematische Seitenansicht der ersten Vorrichtung,
- Fig. 3a bis 3e: den Transport eines Blechs mittels einer zweiten Vorrichtung.

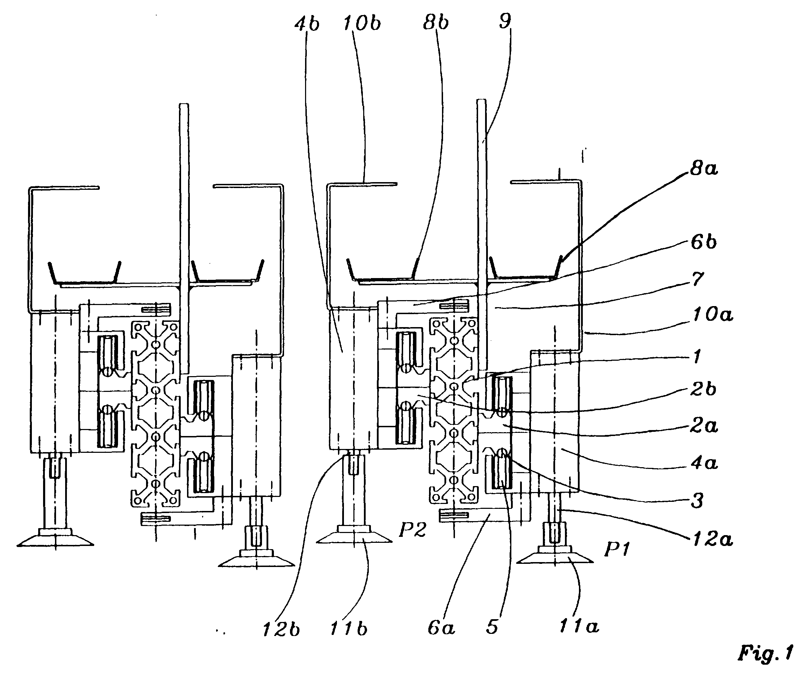

In Fig. 1 ist eine aus zwei identischen Vorrichtungen bestehende Transporteinrichtung im Querschnitt gezeigt. Die beiden Vorrichtungen sind an einem (hier nicht gezeigten) Aufnahmerahmen gehalten. Jede der Vorrichtungen weist einen, vorzugsweise aus einem Aluminiumprofil hergestellten, Rahmen 1 auf, an dessen Längsseiten höhenversetzt eine erste 2a und zweite Schiene 2b angebracht sind. Die erste 2a und zweite Schiene 2b sind hier gerade ausgebildet. Sie weisen ein hintergriffiges Profil auf. Die Schienen 2a, 2b können aus einem extrudierten Kunststoffprofil hergestellt sein, wobei die Lauffläche aus einem in das Kunststoffprofil eingeschobenen Metallstab 3 gebildet sein kann. Ein erster 4a und ein zweiter Schlitten 4b sind mittels die erste 2a und zweite Schiene 2b hintergriffig umgreifender Räder 5 verfahrbar geführt. Vom ersten Schlitten 4a erstreckt sich ein parallel zur unteren Schmalseite des Rahmens 1 bewegbares erstes Befestigungselement 6a; vom zweiten Schlitten 4b erstreckt sich ein parallel zur oberen Schmalseite des Rahmens 1 bewegbares zweites Befestigungselement 6b. Das erste Befestigungselement 6a ist klemmend am Untertrum TU eines Riemens 7 und das zweite Befestigungselement 6b ist klemmend am Obertrum TO des Riemens 7 befestigt. Die klemmende Verbindung kann erforderlichenfalls durch eine (hier nicht dargestellte) steuerbare Klemmvorrichtung gelöst und nachfolgend wieder hergestellt werden, so daß die Position der Schlitten 4a, 4b zueinander änderbar ist. Ein erster 8a und ein zweiter Kabelkanal 8b sind an einem sich vom Rahmen 1 erstreckenden Steg 9 befestigt. Der erste 8a und zweite Kabelkanal 8b wird jeweils von einem am ersten Schlitten 4a befestigten ersten 10a und einem am zweiten Schlitten 4b befestigten zweiten Schutzblech 10b teilweise umgriffen.

Ein erster Saugnapf 11a ist an einem ersten Stellglied 12a vertikal verfahrbar befestigt; ein zweiter Saugnapf 11b ist vertikal verfahrbar an einem zweiten Stellglied 12b befestigt. Der erste Saugnapf 11a befindet sich in einer ersten Position P1, welche vom ersten Schlitten 4a entfernt ist. Der zweite Saugnapf 11b befindet sich in einer nahe am zweiten Schlitten 4b befindlichen zweiten Position P2. Sämtliche Haftflächen der als Saugnäpfe 11a, 11b ausgeführten Tragelemente können in ein und dieselbe Ebene verfahren werden.

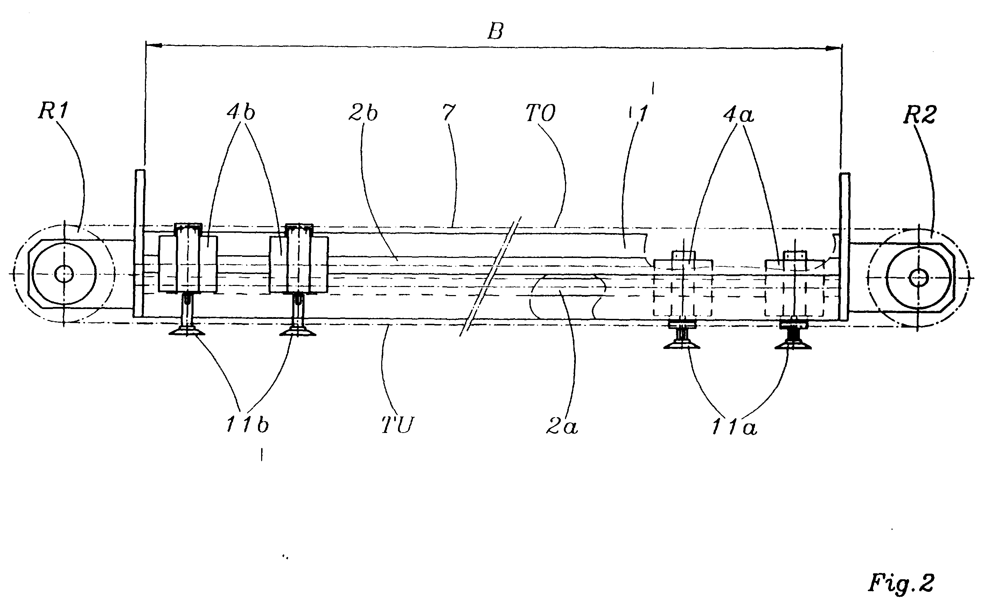

Fig. 2 zeigt eine schematische Seitenansicht der ersten Vorrichtung. Dabei sind jeweils zwei erste Schlitten 4a an der ersten Schiene 2a und zwei zweite Schlitten 4b an der zweiten Schiene 2b aufgenommen. Der Abstand zwischen den beiden ersten 4a und den beiden zweiten Schlitten 4b ist gleich. Mit B ist die Länge des Bewegungswegs bezeichnet. Der Riemen 7, bei dem es sich vorzugsweise um einen Zahnriemen handeln kann, ist um eine erste R1 und eine zweite Rolle R2 geführt. Eine der beiden Rollen R1, R2 ist mit einer (hier nicht gezeigten) Welle verbunden, die von einem reversierbaren Elektromotor angetrieben wird. Bei einer umlaufenden Bewegung des Riemens wird eine entgegengesetzte Bewegung des ersten 4a und des zweiten Schlittens 4b hervorgerufen, wobei sich die beiden Schlitten 4a, 4b begegnen.

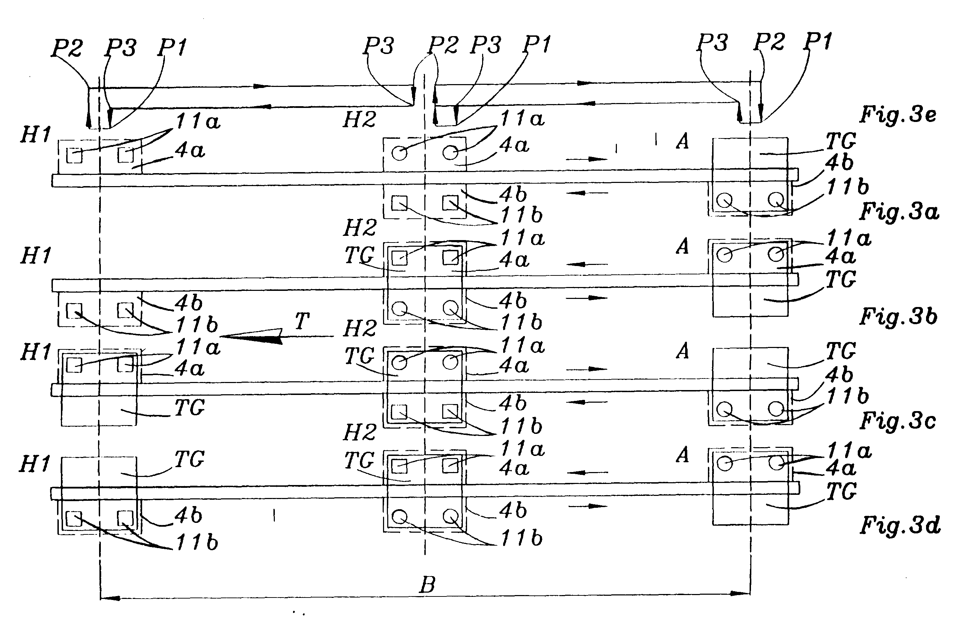

In den Fig. 3a bis 3e ist schematisch der Transport eines Blechs mittels einer zweiten Vorrichtung gezeigt. Dabei sind zwei erste Schlitten 4a mit jeweils zwei ersten Saugnäpfen 11a am Untertrum TU und zwei zweite Schlitten 4b mit jeweils zwei zweiten Saugnäpfen 11b am Obertrum TO des Riemens 7 befestigt. Der Abstand zwischen den ersten Schlitten 4a und den zweiten Schlitten 4b ist so gewählt, daß sich einer der ersten 4a und einer der zweiten Schlitten 4b in gegenüberstehender Anordnung befinden, wenn der andere erste 4a bzw. der andere zweite Schlitten 4b jeweils am Ende des Bewegungswegs B stehen. Mit T ist die Transportrichtung, mit TG ein plattenförmiges Transportgut bezeichnet.

Mit der gezeigten zweiten Vorrichtung ist es möglich, ein Transportgut TG zu einer vorgegebenen ersten Halteposition H1 oder einer vorgegebenen zweiten Halteposition H2 zu transportieren. Dazu verfahren die in einer Aufnahmeposition A befindlichen zweiten Saugnäpfe 11b von der zweiten P2 in die erste Position P1. Sie werden mit Unterdruck beaufschlagt. Das Transportgut TG haftet an den zweiten Saufnäpfen 11b an. Nachfolgend werden die zweiten Saugnäpfe 11b in die dritte Position P3 gestellt. Der Riemen 7 wird um die halbe Länge des Bewegungswegs B bewegt.

Sofern das Transportgut TG in der zweiten Halteposition H2 abgelegt werden soll, verfahren die zweiten Saugnäpfe 11b in die zweite Position P2. Die Unterdruckbeaufschlagung wird unterbrochen und das Transportgut TG auf einem in der zweiten Halteposition befindlichen Stapel abgelegt.

Sofern das Transportgut TG zur ersten Halteposition H1 transportiert werden soll, werden die ersten Saugnäpfe 11a des in gegenüberliegender Position befindlichen ersten Schlittens 4a von der ersten P1 in die dritte Position P3 verfahren und mit Unterdruck beaufschlagt. Die Beaufschlagung der zweiten Saugnäpfe 11b mit Unterdruck wird unterbrochen. Die zweiten Saugnäpfe 11b werden in die erste Position P1 verfahren. Dadurch wird das Transportgut TG von den zweiten 11b an die ersten Saugnäpfe 11a übergeben. Der Riemen 7 wird dann um die halbe Länge des Bewegungswegs B bewegt. Die das Transportgut TG tragenden ersten Saugnäpfe 11a gelangen zur ersten Halteposition H1. Zur Abgabe des Transportguts werden die ersten Saugnäpfe 11a in die zweite Position P2 verfahren. Die Unterdruckbeaufschlagung wird unterbrochen. Danach werden die ersten Saugnäpfe 11a in die erste Position P1 verfahren. Anschließend können die ersten Saugnäpfe 11a durch Bewegen des Riemens 7 in Transportrichtung T wieder in die in Fig. 3b gezeigte Ausgangsstellung zurückverfahren werden.

In Fig. 3e ist schematisch der Bewegungsablauf der zweiten 11b und ersten Saugnäpfe 11a beim Transport eines Transportguts TG in die erste Halteposition H1 gezeigt. Die erste Position ist mit P1, die zweite Position mit P2 und die dritte Position mit P3 bezeichnet.

### Bezugszeichenliste

- 1: Rahmen
- 2a, 2b: erste, zweite Schiene
- 3: Metallstab
- 4a, 4b: erster, zweiter Schlitten
- 5: Rad
- 6a, 6b: erstes, zweites Befestigungselement
- 7: Riemen
- 8a, 8b: erster, zweiter Kabelkanal
- 9: Steg
- 10a, 10b: erstes, zweites Schutzblech
- 11a, 11b: erster, zweiter Saugnapf
- 12a, 12b: erstes, zweites Stellglied

- T: Transportrichtung
- TO: Obertrum
- TU: Untertrum
- TG: Transportgut
- H1: erste Halteposition
- H2: zweite Halteposition
- A: Aufnahmeposition
- R1: erste Rolle
- R2: zweite Rolle
- B: Bewegungsweg
- P1: erste Position
- P2: zweite Position
- P3: dritte Position

## Patentansprüche

1. Vorrichtung zum Transport von plattenförmigem Transportgut (TG), wie Blechen oder Platinen, mit einem Rahmen (1) und mindestens zwei entlang des Rahmens (1) bewegbaren Tragelementen (11a, 11b), **dadurch gekennzeichnet,** daß ein erstes Tragelement (11a) an einem am Rahmen (1) aufgenommenen ersten Schlitten (4a) und ein zweites Tragelement (11b) an einem am Rahmen (1) aufgenommenen zweiten Schlitten (4b) angebracht und eine Einrichtung (R1, R2, 6a, 6b, 7) zum gleichzeitigen Bewegen des ersten (4a) und des zweiten Schlittens (4b) in entgegengesetzte Richtungen vorgesehen ist.

2. Vorrichtung nach Anspruch 1, wobei der erste Schlitten (4a) in einer am Rahmen (1) vorgesehenen ersten (2a) und der zweite Schlitten (4b) in einer am Rahmen (1) vorgesehenen zweiten Schiene (2b) geführt ist, wobei die Schienen (2a, 2b) vorzugsweise gerade ausgebildet sind.

3. Vorrichtung nach einem der vorhergehenden Ansprüche, wobei ein am ersten (4a) und/oder zweiten Schlitten (4b) vorgesehenes Führungselement (5) die erste bzw. zweite Schiene (2b) hintergriffig umgreift.

4. Vorrichtung nach einem der vorhergehenden Ansprüche, wobei ein vom ersten Schlitten (4a) sich erstreckendes erstes Befestigungselement (6a) am Untertrum (TU) und ein vom zweiten Schlitten (4b) sich erstreckendes zweites Befestigungselement (6b) am Obertrum (TO) eines um den Rahmen (1) geführten Verbindungsmittels (7) befestigbar ist.

5. Vorrichtung nach einem der vorhergehenden Ansprüche, wobei das erste (6a) und das zweite Befestigungselement (6b) eine steuerbare Klemmvorrichtung aufweisen.

6. Vorrichtung nach einem der vorhergehenden Ansprüche, wobei das Verbindungsmittel (7) um endständig am Rahmen (1) angebrachte Rollen (R1, R2) geführt ist.

7. Vorrichtung nach einem der vorhergehenden Ansprüche, wobei mindestens eine der Rollen (R1, R2) auf einer elektromotrisch angetriebenen Welle angebracht ist.

8. Vorrichtung nach einem der vorhergehenden Ansprüche, wobei der erste (4a) und/oder zweite Schlitten (4b) ein Mittel zum Bewegen des ersten bzw. zweiten Tragelements (11a, 11b) senkrecht zur Bewegungsrichtung (T) der Schlitten (4a, 4b) aufweist/aufweisen.

9. Vorrichtung nach einem der vorhergehenden Ansprüche, wobei das Mittel zum Bewegen ein pneumatisch, hydraulisch oder elektromotorisch betätigtes Stellglied (12a, 12b) aufweist.

10. Vorrichtung nach einem der vorhergehenden Ansprüche, wobei das Stellglied (12a, 12b) in drei vorgegebene Positionen (P1, P2, P3) verfahrbar ist.

11. Vorrichtung nach einem der vorhergehenden Ansprüche, wobei das erste (11a) und das zweite Tragelement (11b) jeweils mindestens einen mit einer Einrichtung zur Erzeugung von Unterdruck verbundenen Saugnapf und/oder einen elektrisch schaltbaren Magneten aufweisen.

12. Vorrichtung nach einem der vorhergehenden Ansprüche, wobei der erste Schlitten (4a) zwei erste Saugnäpfe (11a) und der zweite Schlitten (4b) zwei zweite Saugnäpfe (11b) aufweist.

13. Vorrichtung nach einem der vorhergehenden Ansprüche, wobei am Untertrum (TU) des Verbindungsmittels (7) zwei erste Schlitten (4a) und am Obertrum (TO) des Verbindungsmittels (7) zwei zweite Schlitten (4b) jeweils im Abstand der halben Länge eines Bewegungswegs (B) befestigt sind.

14. Transporteinrichtung zum Transport von plattenförmigem Transportgut (TG), wie Blechen oder Platinen, wobei mehrere Vorrichtungen nach einem der vorhergehenden Ansprüche nebeneinander an einem Aufnahmerahmen gehalten sind.

15. Transporteinrichtung nach Anspruch 14, wobei eine gemeinsame Welle zum Antrieb einer der Rollen (R1, R2) jeder Vorrichtung vorgesehen ist.

16. Verfahren zum Transport von plattenförmigem Transportgut (TG), wie Blechen oder Platinen, mit einer Vorrichtung nach einem der vorhergehenden Ansprüche umfassend die folgenden Schritte:
a) Verfahren des ersten (11a) bzw. zweiten Tragelements (11b) in eine vom ersten Schlitten (4a) entfernte erste Position (P1),
b) Erzeugen einer vom ersten (11a) bzw. zweiten Tragelement (11b) ausgehenden auf das Transportgut (TG) wirkenden Kraft,
c) Aufnahme des Transportguts am ersten bzw. zweiten Tragelement (11a, 11b),
d) Bewegen des ersten (4a) bzw. zweiten Schlittens (4b) entlang dem Bewegungsweg (B) bis zu einer vorgegebenen Halteposition (H1, H2) und
e) Wegnehmen der vom ersten bzw. zweiten Tragelement (11a, 11b) auf das Transportgut (TG) wirkenden Kraft.

17. Verfahren nach Anspruch 16, wobei die vorgegebene Halteposition (H1) am einen Ende des Bewegungswegs (B) sich befindet.

18. Verfahren nach Anspruch 16 oder 17, wobei das erste (11a) bzw. zweite Tragelement (11b) vor oder während dem Schritt lit. e in die erste Position (P1) verfahren wird.

19. Verfahren nach einem der Ansprüche 16 bis 18, wobei das erste (11a) bzw. zweite Tragelement (11b) nach dem Schritt lit. e in eine nahe am ersten (4a) bzw. zweiten Schlitten (4b) befindliche zweite Position (P2) verfahren wird.

20. Verfahren nach einem der Ansprüche 16 bis 19, wobei das erste (11a) bzw. zweite Tragelement (11b) nach dem Schritt lit. c in eine dritte Position (P3) verfahren wird, die zwischen der ersten (P1) und der zweiten Position (P2) sich befindet.

21. Verfahren nach einem der Ansprüche 16 bis 20, wobei eine weitere vorgegebene Halteposition (H2) in der Mitte des Bewegungswegs (B) sich befindet.

22. Verfahren nach einem der Ansprüche 16 bis 21, wobei das erste (6a) und das zweite Tragelement (6b) jeweils aus mindestens einem mit einer Einrichtung zur Erzeugung von Unterdruck verbundenen Saugnapf und/ oder einem elektrisch schaltbaren Magneten gebildet ist/sind.

23. Verfahren nach Anspruch 22, wobei bei Erreichen der zweiten Halteposition (H2) das zweite (11b) bzw. erste Tragelement (11a) in die zweite Position (P2) gestellt und mit Unterdruck oder einem Magentfeld beaufschlagt wird, so daß das Transportgut (TG) vom ersten (11a) bzw. zweiten (11b) an das zweite (11b) bzw. erste Tragelement (11a) übergeben wird.

24. Verfahren nach Anspruch 23, wobei der zweite (4b) bzw. erste Schlitten (4a) in die Halteposition (H1) bewegt wird.
